# EUROPÄISCHE PATENTANMELDUNG

(11) **EP 3 984 369 A1**
(43) Veröffentlichungstag der Anmeldung: **20.04.2022**
(21) Anmeldenummer: 20201868.5
(22) Anmeldetag: 14.10.2020
(51) Int. Cl.: A23C 9/18, A23F 5/12, A23F 3/32, A23G 1/56

(54) **KAPSEL ZUR ZUBEREITUNG EINES GETRÄNKS SOWIE VERFAHREN ZU DESSEN HERSTELLUNG UND VERWENDUNG**

(71) Anmelder: Delica AG, 5033 Buchs AG (CH)
(72) Erfinder: SIEFARTH, Caroline, 4054 Basel (CH); NOEVER, Christina Sophie, 4058 Basel (CH); STEINBRÜCKNER, Kathrin, 4127 Birsfelden (CH); THILLA, Tim, 79576 Weil am Rhein (DE); AFFOLTER, Roland, 5103 Möriken (CH)
(74) Vertreter: Hepp Wenger Ryffel AG

(57) **Zusammenfassung**

Kapsel zur Zubereitung eines Getränks, insbesondere eines Heissgetränks, bestehend aus einem Pressling aus einem Material, ausgewählt aus der Gruppe bestehend aus Instantkaffee, Instanttee, löslicher Kaffee-Ersatz-Extrakt, Kakao, Trinkschokolade, Milchpulver, vegane Milchersatzpulver, Trockensuppe, Proteinpulver, Füllstoffe, Nahrungsergänzungsmittel und Kombinationen davon, wobei die Kapsel derart ausgestaltet ist, dass sich diese in insbesondere heissem Wasser auflöst.

## Beschreibung

Die vorliegende Erfindung betrifft eine Kapsel zur Zubereitung eines Getränks, insbesondere eines Heissgetränks, welche geeignete Inhaltsstoffe aufweist und sich in insbesondere heissem Wasser auflöst, sowie ein Verfahren zu deren Herstellung und Verwendung gemäss den unabhängigen Patentansprüchen.

Die Bereitstellung eines Genussmittels wie Kaffee in Kapselform ist hinlänglich bekannt. Die üblicherweise als Hüllmaterial eingesetzten Werkstoffe wie Kunststoffe oder Aluminium (vgl. z.B. EP-2 106 375 A2) weisen aber den Nachteil auf, dass sie nicht kompostierbar sind. Solche Kapseln müssen entsorgt oder separat gesammelt und der Widerverwertung zugeführt werden.

In der DE 10 2014 000187 B4 wurde vorgeschlagen, einen Pressling zur Herstellung von beispielsweise Kaffee mit einem Hüllmaterial aus einer biologisch abbaubaren Schicht zu ummanteln, wobei es sich bei dieser Schicht um ein Polysaccharid oder ein Derivat davon in Verbindung mit einem polyolen Spacer und einem zugehörigen Vernetzer handelt, d.h. ein vernetztes Polysaccharid. Ein konkretes Ausführungsbeispiel ist nicht beschrieben.

In der EP-3 115 316 B1 ist eine ähnliche Kapsel zur Herstellung von beispielsweise Kaffee beschrieben, wobei das vernetzte Polysaccharid im Hüllmaterial ohne die Verwendung eines polyolen Abstandshalters erhalten wurde. Konkret ist Calciumalginat als Hüllmaterial genannt.

In der US-2013/0136843 A1 wird vorgeschlagen, einen Kern aus Kaffeepulver mit einer Hülle aus verdichtetem Kaffee zu ummanteln.

Die vorstehend genannten Lösungen aus dem Stand der Technik sind allerdings nicht optimal im Hinblick auf die Bereitstellung einer Kapsel zur Zubereitung eines Heissgetränks unter möglichst ökonomischen, ökologisch verträglichen und herstellungstechnischen Aspekten.

Es ist eine Aufgabe der vorliegenden Erfindung, eine Kapsel zur Zubereitung eines Getränks, insbesondere eines Heissgetränks, bereitzustellen, welche die Nachteile des Stands der Technik überwindet.

Die Aufgabe wird durch den Gegenstand der unabhängigen Ansprüche der vorliegenden Anmeldung gelöst.

Die vorliegende Erfindung betrifft eine Kapsel zur Zubereitung eines Getränks in einer Getränkezubereitungsmaschine, insbesondere eines Heissgetränks, bestehend aus einem Pressling und optional einer Hülle. Der Pressling besteht dabei aus einem Material, ausgewählt aus der Gruppe bestehend aus Instantkaffee, Instanttee, löslicher Kaffee-Ersatz-Extrakt wie zum Beispiel Dinkelkaffee, Gerstenkaffee oder Lupinenkaffee, Kakao, Trinkschokolade, Milchpulver, vegane Milchersatzpulver, Trockensuppe, Proteinpulver, Füllstoffe, Nahrungsergänzungsmittel und Kombinationen davon. Die Kapsel ist dabei wasserlöslich. Entsprechend enthält die Kapsel keinen gemahlenen gerösteten Kaffee und keine Teeblätter.

Eine Kapsel, welche sich in Wasser auflöst stellt für den Verbraucher eine optimale Lösung dar. Es entsteht bei der Zubereitung des Getränks kein Abfallstoff, welcher entsorgt oder separat gesammelt und der Wiederverwertung zugeführt werden muss. Unter einem "Pressling" wird gemäss der vorliegenden Erfindung ein Material verstanden, das unter Druck verdichtet wurde. Die Bereitstellung des Materials der Kapsel als Pressling ist vorteilhaft, um das Handling für den Anwender zu vereinfachen. Insbesondere die Dosierung und das Eingeben in eine Getränkezubereitungsmaschine werden vereinfacht. Das Material weist hierzu vorzugsweise eine bestimmte Festigkeit auf. Dies kann dadurch erreicht werden, dass die Verdichtung des Materials beispielsweise mit einem Kompressionsdruck im Bereich von 1-100 MPa, bevorzugt 5-50 MPa, durchgeführt wird.

Gemäss der vorliegenden Erfindung gilt eine Kapsel als im Wasser gelöst, wenn mindestens 90% der Kapsel in Lösung gegangen ist bzw. in diesem dispergiert vorliegt. Dabei löst sich das Material der Kapsel in einer Brühkammer bei einem Brühprozess von bis zu 3 min Dauer und einem an das zu erstellende Getränk bzw. an den Pressling angepassten Wasserdruck. Je nach Material des Presslings kann die Kapsel für die Zubereitung eines Heiss- oder Kaltgetränks vorgesehen sein. Für Heissgetränke löst sich das Material der Kapsel ab 60 °C. Für Kaltgetränke sind Temperaturen bis maximal 30 °C vorgesehen, bei welchen sich die Kapsel in Wasser lösen soll. Ausserdem kann für leicht lösliche Presslinge ein kürzerer Brühprozess mit geringerem Wasserdruck eingestellt und für schwer lösliche Presslinge ein längerer Brühprozess mit höherem Wasserdruck erforderlich sein. Ein Wasserdruck kann mit einem Gegendruckventil auf der Ausgangsseite einer Brühkammer einer Getränkezubereitungsmaschine einfach realisiert werden.

Durch ein Gegendruckventil wird ermöglicht, dass in das Getränk Luft eingetragen wird. Der Lufteintrag führt zu einem Schaum an der Oberfläche des Getränks. Durch den Lufteintrag verbessert sich auch das Mundgefühl des Getränks. Es erscheint dem Benutzer vollmundiger und cremiger.

Die Hülle der Kapsel, wenn eine solche verwendet wird, sollte ebenfalls aus einem wasserlöslichen Material bestehen. Beispielsweise kann eine Beschichtung des Presslings mit Natriumalginat erfolgen. Hierzu wird ein System in Form einer Lösung, insbesondere einer wässrigen Lösung, mit einer Konzentration an Natriumalginat zwischen 1% und 5% w/w, vorzugsweise zwischen 1.2% und 2.5% w/w, besonders bevorzugt zwischen 1.5% und 2% w/w, bereitgestellt, bezogen auf das Gesamtgewicht des Systems. Dabei wird unter einem System nicht nur ein wässriges System (d.h. ein ausschliesslich Wasser als Lösungsmittel umfassendes System) verstanden. Ebenso ist es denkbar, dass das System ein Lösungsmittelgemisch aus Wasser und einer wassermischbaren Lösung, beispielsweise aus niederkettigem (z.B. C₁₋₈), physiologisch akzeptablem Alkohol, wie Ethanol, ist. Ebenso ist es denkbar, dass zum Erstellen des wässrigen Systems anstelle von Wasser als Lösungsmittel ein Kaffeeextrakt beispielsweise von einem gebrühten Kaffee oder von einem Instantkaffee verwendet wird. Die Ummantelung des Presslings mit dem Hüllmaterial kann beispielsweise durch Eintauchen des Presslings in das vorstehend beschriebene System erfolgen. Der Pressling kann über eine geeignete Aufhängung in das System eingebracht werden, wo er für eine gewünschte Zeit verbleibt, beispielsweise für 1 bis 60 s, vorzugsweise 2 bis 30 s, besonders bevorzugt 3 bis 10 s. Andere Methoden zur Beschichtung in einem Tauchbad, beispielsweise mit einer festen Position im Tauchbad oder einer rollenden Fortbewegung durch das Tauchbad, sind denkbar. Anschliessend wird der auf seiner Oberfläche mit Hüllmaterial umgebene (d.h. beschichtete) Pressling aus dem System entnommen und getrocknet. Die Hülle kann aus mehreren so aufgebrachten Schichten bestehen.

Die Kapsel kann ein Volumen im Verhältnis zwischen 1:1 bis 1:5, bevorzugt zwischen 1:1.2 bis 1:3, besonders bevorzug 1:1.4 bis 1:1.6, zum Volumen der Brühkammer aufweisen.

Der Pressling kann eine Bruchfestigkeit von wenigstens 10 N, insbesondere mehr als 15 N, bevorzugt mehr als 20 N, besonders bevorzugt mehr als 25 N, oder gar mehr als 30 N aufweisen. Diese Bruchfestigkeit ist für das Handling der Kapsel relevant. So soll diese nicht im Transport oder bei Gebrauch durch den Anwender, insbesondere beim Einlegen in eine entsprechend Getränkezubereitungsmaschine, zerbrechen oder zerfallen.

Die Bruchfestigkeit des Presslings wird bestimmt, indem der Pressling in einer Materialprüfmaschine einem Kraftversuch unterzogen wird. Hierfür werden die Prüfproben mit stetig ansteigender Kraft zwischen zwei parallelen Druckplatten beansprucht. Die Belastung wird erhöht bis es zum Anriss bzw. zum Bruch der Prüfprobe kommt, einhergehend mit einem Kraftabfall. Die Maximalkraft wird als Druck- bzw. Bruchfestigkeit ausgegeben. Diese Methode ist auch in der WO 2008/123775 A1, S.3 beschrieben. Beispielsweise wird die Bruchfestigkeit des Presslings mittels einer Zug-Druck-Prüfmaschine mit einem Kraftaufnehmer Xforce P der Firma Zwick/Roell getestet.

Die benötigte Bruchfestigkeit kann einerseits durch die Anwendung eines entsprechend ausgewählten Kompressionsdrucks bei der Herstellung des Presslings erreicht werden. Andererseits ist aber auch die Zusammensetzung des Materials des Presslings für dessen Bruchfestigkeit wesentlich. Hier haben sich insbesondere die folgenden Zusammensetzungen als geeignet erwiesen:
- 0-40 Gew% Instantkaffee,
- 60-100 Gew% Milchpulver oder vegane Milchersatzpulver.

Gemäss der vorliegenden Erfindung ist das Material ausgewählt aus der Gruppe bestehend aus Instantkaffee, Instanttee, löslicher Kaffee-Ersatz-Extrakt wie z.B. Dinkelkaffee, Gerstenkaffee oder Lupinenkaffee, Kakao, Trinkschokolade, Milchpulver, vegane Milchersatzpulver, Trockensuppe, Proteinpulver, Füllstoffe, Nahrungsergänzungsmittel und Kombinationen davon. Derartige Materialien sind bekannt und müssen hier nicht näher erläutert werden. Wesentlich ist, dass sich diese Materialien in Wasser lösen.

Die erfindungsgemässe Kapsel kann verschiedene Formen aufweisen. Eine Vielzahl solcher Formen ist im Stand der Technik für entsprechende Kapseln im relevanten technischen Gebiet bereits bekannt. So kann die Kapsel beispielsweise eine Form ausgewählt aus der Gruppe Kugel, Ellipsoid, Würfel, Quader, Zylinder, Prisma, Kegel, Kegelstumpf, Pyramide, Pyramidenstumpf, Torus, Tetraeder, Oktaeder, Dodekaeder, Ikosaeder und Kaffeebohne aufweisen. Bevorzugt ist die Kapsel kugelförmig.

Die Kapsel weist vorzugweise ein Gewicht zwischen 4 g und 15 g, bevorzugt zwischen 5 g und 13 g, besonders bevorzugt zwischen 6 g und 11 g, auf. Es hat sich gezeigt, dass mit dieser Menge an Material eine Portion eines geschmacklich hochwertigen Getränks herstellen lässt.

Die Kapsel kann einen grössten Durchmesser zwischen 10 mm und 50 mm, bevorzugt zwischen 15 mm und 40 mm, besonders bevorzugt zwischen 20 mm und 35 mm, aufweisen. Diese Grösse der Kapsel hat sich für den Anwender als bedienerfreundlich erwiesen. Ausserdem stellt dies eine Grösse dar, welche im Detailhandel gut in Mehrfachpackungen ausgeliefert werden kann.

Der Pressling kann mehr als 50 Gew% Bindemittel aufweisen. Es hat sich gezeigt, dass insbesondere Instantkaffee einen relativ hohen Anteil an Bindemittel benötigt, um einen stabilen Pressling herstellen zu können. Dabei wird unter einem Bindemittel eine zweite Materialkomponente verstanden, welche einer ersten Materialkomponente verhilft, einen stabilen Pressling gemäss den Anforderungen ausbilden zu können.

Die Funktion des Bindemittels kann beispielsweise das Milchpulver übernehmen. Entsprechende ist das Milchpulver das Bindemittel. Es wird kein zusätzlich separates Bindemittel mehr benötigt.

Das Milchpulver kann ausgewählt sein aus der Gruppe Magermilchpulver, Vollmilchpulver, Kokosmilchpulver, Hafermilchpulver, Mandelmilchpulver oder einer Kombination davon. Es versteht sich von selbst, dass auch andere, insbesondere vegane, Milchersatzpulver verwendet werden können, wie beispielsweise Sojamilchpulver, Reismilchpulver, Dinkelmilchpulver, Hirsemilchpulver, Hanfmilchpulver, Lupinenmilchpulver, Erbsenmilchpulver, Quinoamilchpulver, Cashewmilchpulver oder Haselnussmilchpulver.

Der Pressling kann aus 60 Gew% Kokosmilchpulver und 40 Gew% Instantkaffee bestehen. Es sind aber auch andere Zusammensetzungen und Mischverhältnisse möglich, wie nachfolgende Tabelle beispielshaft für eine kugelförmige Verpressung mit 30 MPa zeigt:

| Komp. 1 | Komp. 2 | % Komp 1 | % Komp 2 | Bruchfest. (N) |
|---|---|---|---|---|
| Vollmilchpulver | Ohne | 100 | 0 | 18 |
| Magermilchpulver | ohne | 100 | 0 | 124 |
| Magermilchpulver | Instantkaffee | 80 | 20 | 11 |
| Kakaomilchpulver | Ohne | 100 | 0 | 54 |
| Kokosmilchpulver | ohne | 100 | 0 | 25 |
| Kokosmilchpulver | Instantkaffee | 80 | 20 | 30 |
| Kokosmilchpulver | Instantkaffee | 70 | 30 | 16 |
| Kokosmilchpulver | Instantkaffee | 60 | 40 | 17 |
| Mandelmilchpulver | ohne | 100 | 0 | 20 |
| Mandelmilchpulver | Instantkaffee | 80 | 20 | 12 |
| Mandelmilchpulver | Instantkaffee | 75 | 25 | 10 |
| Mandelmilchpulver | Instantkaffee | 70 | 30 | 10 |

Der Pressling kann durchgehend homogen ausgestaltet sein. Dabei wird unter homogen verstanden, dass der Pressling über seinen Querschnitt gleichmässig verpresst und über den Querschnitt dieselbe Dichte aufweist. Ausserdem sind die Materialien des Presslings durchgehend gleichmässig vermischt.

Die Herstellung der erfindungsgemässen Kapsel kann erfolgen, indem ein Pressling des gewünschten Materials bzw. der gewünschten Materialzusammensetzung hergestellt wird.

Die vorliegende Erfindung betrifft auch ein Verfahren zur Herstellung einer Kapsel, insbesondere wie vorgängig beschrieben, umfassend die Schritte
a) Bereitstellen eines Materials, ausgewählt aus der Gruppe bestehend aus Instantkaffee, Instanttee, löslicher Kaffee-Ersatz-Extrakt wie z.B. Dinkelkaffee, Gerstenkaffee oder Lupinenkaffee, Kakao, Trinkschokolade, Milchpulver, vegane Michersatzpulver, Trockensuppe, Proteinpulver, Füllstoffe, Nahrungsergänzungsmittel und Kombinationen davon,
b) Verdichten des Materials zu einem Pressling,
wobei das Material der Kapsel wasserlöslich, insbesondere in heissem Wasser, ist.

Das Verdichten des Materials in die Form eines Presslings ist bekannt und wurde bereits vorstehend beschrieben.

Die erfindungsgemässe Kapsel kann zur Zubereitung eines Getränks, insbesondere eines Heissgetränks, ausgewählt aus der Gruppe umfassend Kaffee, Tee, Kaffee-Ersatz, Kakao, Trinkschokolade, Milch oder Suppe, oder Kombinationen davon, verwendet werden. Dabei löst sich die Kapsel, wie vorgängig erläutert, auf.

Es ist erfindungsgemäss bevorzugt, dass die Zubereitung des Getränks durch Auflösen der Kapsel mit einer insbesondere heissen Flüssigkeit ausgewählt aus der Gruppe bestehend aus Wasser und Milch erfolgt. Dabei löst sich die Kapsel auf.

Entsprechende Zubereitungsverfahren und Vorrichtungen hierfür sind aus dem Stand der Technik bekannt.

In den nachfolgend aufgelisteten Beispielen wurden jeweils 20 Presslinge hergestellt, wobei nachfolgend der Einfachheit halber nur noch die Einzahl verwendet wird. Anhand der Hälfte der Presslinge wurde deren Bruchfestigkeit gemessen. Die andere Hälfte der Presslinge wurde in der Brühkammer einer Getränkezubereitungsmaschine mit bis zu 93 °C heissem Wasser beaufschlagt bei einer Zubereitungszeit bis zu 3 min. Die Presslinge haben sich dabei komplett aufgelöst.

### Beispiel 1:

Ein kugelförmiger Pressling für die Zubereitung eines veganen Milchkaffees wurde hergestellt durch Verdichten von 8 g einer Mischung aus 40 Gew% Instantkaffee und 60 Gew% Kokosmilchpulver in einer Presse mit 30 MPa. Der Pressling wies eine mittlere Bruchfestigkeit von 17 N auf.

### Beispiel 2:

Ein kugelförmiger Pressling für die Zubereitung eines Milchkaffees wurde hergestellt durch Verdichten von 7.5 g einer Mischung aus 20 Gew% Instantkaffee und 80 Gew% Magermilchpulver in einer Presse mit 30 MPa. Der Pressling wies eine mittlere Bruchfestigkeit von 11 N auf.

### Beispiel 3:

Ein kugelförmiger Pressling für die Zubereitung einer Kakaomilch wurde hergestellt durch Verdichten von 10.2 g einer Mischung aus Zucker, Süssmolkenpulver, fettarmem Kakaopulver, Magermilchpulver und Salz in einer Presse mit 30 MPa. Der Pressling wies eine mittlere Bruchfestigkeit von 54 N auf.

### Beispiel 4:

Ein kugelförmiger Pressling für die Zubereitung eines Milchgetränks wurde hergestellt durch Verdichten von 7.5 g Magermilchpulver in einer Presse mit 30 MPa. Der Pressling wies eine mittlere Bruchfestigkeit von 124 N auf. Die Getränkezubereitung erfolgte mit Wasser bei einer Temperatur von 25 °C. Es wurde ein Kaltgetränk hergestellt. Der Pressling hat sich komplett aufgelöst.

## Patentansprüche

1. Kapsel zur Zubereitung eines Getränks in einer Getränkezubereitungsmaschine, insbesondere eines Heissgetränks, bestehend aus einem Pressling und optional einer Hülle, wobei der Pressling aus einem Material, ausgewählt aus der Gruppe bestehend aus Instantkaffee, Instanttee, löslicher Kaffee-Ersatz-Extrakt, Kakao, Trinkschokolade, Milchpulver, vegane Milchersatzpulver, Trockensuppe, Proteinpulver, Füllstoffe, Nahrungsergänzungsmittel und Kombinationen davon, wobei die Kapsel derart ausgestaltet ist, dass sich diese in insbesondere heissem Wasser auflöst.

2. Kapsel nach Anspruch 1, wobei der Pressling eine Bruchfestigkeit von wenigstens 10 N, vorzugsweise mehr als 20 N, besonders bevorzugt mehr als 30 N, aufweist.

3. Kapsel nach Anspruch 1 oder 2, wobei der Pressling eine Form aufweist ausgewählt aus der Gruppe Kugel, Ellipsoid, Würfel, Quader, Zylinder, Prisma, Kegel, Kegelstumpf, Pyramide, Pyramidenstumpf, Torus, Tetraeder, Oktaeder, Dodekaeder, Ikosaeder und Kaffeebohne.

4. Kapsel nach einem der Ansprüche 1 bis 3, wobei die Kapsel ein Gewicht zwischen 4 g und 15 g, bevorzugt zwischen 5 g und 13 g, besonders bevorzug zwischen 6 g und 11 g, aufweist.

5. Kapsel nach einem der Ansprüche 1 bis 4, wobei die Kapsel einen grössten Durchmesser zwischen 10 mm und 50 mm, bevorzugt zwischen 15 mm und 40 mm, besonders bevorzugt zwischen 20 mm und 35 mm, aufweist.

6. Kapsel nach einem der Ansprüche 1 bis 5, wobei der Pressling mehr als 50 Gew% Bindemittel aufweist.

7. Kapsel nach einem der Ansprüche 1 bis 6, wobei das Milchpulver das Bindemittel ist.

8. Kapsel nach einem der Ansprüche 1 bis 7, wobei das Milchpulver ausgewählt ist aus der Gruppe Magermilchpulver, Vollmilchpulver, vegane Milchersatzpulver, bevorzugt auf Basis von Kokos, Hafer, Mandel, oder einer Kombination davon.

9. Kapsel nach einem der Ansprüche 1 bis 8, wobei der Pressling aus 80 Gew% Milchpulver und 20 Gew% Instantkaffee besteht.

10. Kapsel nach einem der Ansprüche 1 bis 9, wobei der Pressling durchgehend homogen ausgestaltet ist.

11. Verfahren zum Herstellung einer Kapsel zur Zubereitung eines Getränks, insbesondere gemäss einem der vorhergehenden Ansprüchen, umfassend die Schritte
a) Bereitstellen eines Materials, ausgewählt aus der Gruppe bestehend aus Instantkaffee, Instanttee, löslicher Kaffee-Ersatz-Extrakt, Kakao, Trinkschokolade, Milchpulver, vegane Milchersatzpulver, Trockensuppe, Proteinpulver, Füllstoffe, Nahrungsergänzungsmittel und Kombinationen davon,
b) Verdichten des Materials zu einem Pressling,
wobei das Material wasserlöslich, insbesondere in heissem Wasser, ist.

12. Verfahren nach Anspruch 11, wobei das Verdichten des Materials mit einem Kompressionsdruck im Bereich von 1-100 MPa, bevorzugt 5-50 MPa, erfolgt.

13. Verfahren nach Anspruch 11 oder 12, wobei der Pressling mit einer wasserlöslichen Hülle versehen wird.

14. Verwendung einer Kapsel gemäss einem der Ansprüche 1 bis 10 zur Zubereitung eines Getränks, insbesondere Heissgetränks, ausgewählt aus den Getränkegruppen Kaffee, Tee, Kaffee-Ersatz, Kakao, Trinkschokolade, Milch, vegane Milchalternativen, Proteindrinks, Nahrungsergänzungsmittel oder Suppe, wobei sich die Kapsel dabei auflöst.

15. Verwendung nach Anspruch 14, wobei die Zubereitung des Getränks durch Auflösen der Kapsel mit einer insbesondere heissen Flüssigkeit ausgewählt aus der Gruppe bestehend aus Wasser und Milch erfolgt.
